Europäisches Patentamt

(19) European Patent Office

Office européen des brevets

(11) Numéro de publication : **0 048 198**
**B1**

(12) **FASCICULE DE BREVET EUROPÉEN**

(45) Date de publication du fascicule du brevet :
19.12.84

(51) Int. Cl.³ : **B 29 C   1/02**, B 29 D 27/04

(21) Numéro de dépôt : **81401391.8**

(22) Date de dépôt : **07.09.81**

(54) **Moules conçus pour la fabrication d'objets en matières plastiques non polaires, expansées, à l'alde de rayonnement ultra-haute fréquence.**

(30) Priorité : **11.09.80 FR 8019606**

(43) Date de publication de la demande :
**24.03.82 Bulletin 82/12**

(45) Mention de la délivrance du brevet :
**19.12.84 Bulletin 84/51**

(84) Etats contractants désignés :
**BE CH DE FR GB IT LI NL**

(56) Documents cités :
**FR-A- 1 508 963**
**FR-A- 2 441 474**
**US-A- 3 289 253**

(73) Titulaire : **ISOBOX S.A.**
**F-29114 Bannalec (FR)**

(72) Inventeur : **Soulier, Joel**
**Chaussée d'Ivry Route de Pacy**
**F-28260 Anet (FR)**

(74) Mandataire : **Ores, Irène**
**CABINET ORES 6, Avenue de Messine**
**F-75008 Paris (FR)**

Jouve, 18, rue St-Denis, 75001 Paris, France

**0 048 198**

### Description

La présente invention est relative à des moules conçus pour la fabrication d'objets en matières plastiques non polaires, expansées, à l'aide de rayonnement ultra-haute fréquence (UHF).

Les ondes UHF, que l'on dénomme couramment les micro-ondes et qui se situent entre environ 300 MHZ et 30 GHZ, sont actuellement très largement appliquées, aussi bien dans le domaine médical que dans le domaine scientifique ou industriel.

Cette énergie est instantanément disponible, elle se propage dans toutes les atmosphères (sous vide, sous pression, en ambiance froide, chaude ou ventilée, etc...), elle est également d'un asservissement extrêmement aisé. Le principe en est fort simple : l'application d'un champ électrique continu à une matière électriquement susceptible, aligne les molécules de ladite matière parallèlement au champ comme s'il s'agissait de micro-aimants. Dans un champ électrique alternatif à très haute fréquence, les aimants-molécules ne peuvent pas suivre les lignes de champs du fait des forces d'inertie. C'est donc en heurtant ces forces d'inertie que l'énergie « micro-ondes » se transforme en chaleur. Par contre, lorsque la matière traitée est électriquement neutre, les micro-ondes la traversent, comme si elle n'existait pas : on dit qu'elle est transparente. Aussi, on a essayé d'utiliser cette forme d'énergie particulièrement économe et d'une grande sélectivité, — permettant une action spécifique sur une cible donnée — dans le domaine de la fabrication de matières plastiques expansées. Ainsi, en humectant une matière plastique non polaire (donc transparente au rayonnement UHF) sous forme de particules contenant un agent de gonflement, avec un liquide polaire, et en soumettant ces particules ainsi humectées à un rayonnement UHF, on réalise d'une manière élégante et économique des matières plastiques expansées (cf. notamment les Brevets de la Demanderesse FR-A-2 298 571 et FR-A-2 368 513). Une telle technique constitue un progrès considérable par rapport aux techniques de transformation traditionnelles, consistant à introduire dans un moule une certaine quantité de produits non expansés et à faire pénétrer ensuite de la vapeur d'eau sous pression, à une température suffisante pour apporter les calories nécessaires au déclenchement du processus d'expansion.

Ce procédé de moulage à l'aide de micro-ondes présente, toutefois, encore un inconvénient : les moules utilisés sont des moules classiques, faits dans une matière transparente au rayonnement UHF (ou absorbant très peu ce rayonnement), ce qui a pour conséquence une absence d'homogénéité du chauffage et un accroissement des dépenses en énergie, dû au fait qu'il est nécessaire de réchauffer les parois du moule lors de chaque cycle de moulage. Cet inconvénient a pu être surmonté grâce à un nouveau dispositif mis au point par la Demanderesse (cf. le Brevet Français 2 402 526), lequel dispositif comprend un moule dont l'empreinte est réalisée en un matériau présentant des pertes diélectriques élevées, absorbant le rayonnement UHF, tandis que le corps lui-même dudit moule est réalisé en un matériau non absorbant du rayonnement UHF.

Ces procédés et dispositifs particulièrement avantageux, ne nécessitant aucun circuit capacitif, permettant l'utilisation de tensions peu élevées et assurant une grande homogénéité des matières plastiques expansées, moulées, obtenues, ont été à coup sûr à l'origine du développement très important des mousses plastiques. Toutefois, on s'est aperçu que la nécessité d'avoir des empreintes présentant des caractéristiques électriques très précises, faisait obligation d'incorporer auxdites empreintes des additifs possédant des facteurs de pertes linéaires avec la température. Ces additifs (comme par exemple le charbon, l'oxyde de titane, le titanate de baryum, etc...) sont souvent coûteux, la préparation desdites empreintes toujours difficile, et, de plus, les caractéristiques mécaniques desdites empreintes laissent parfois à désirer. Aussi, des nouveaux moules ont été proposés en un matériau à angle de perte faible ou nul, et dont l'empreinte est réalisée en matière poreuse.

La nature poreuse de cette empreinte fait que si ladite empreinte est transparente au rayonnement UHF à sec, elle absorbe, au contraire, le rayonnement UHF dès l'addition d'un liquide polaire, car ce liquide est absorbé par les pores de ladite empreinte (cf. en particulier le Brevet de la Demanderesse FR-A-2 441 474 dans lequel certaines aires étaient totalement imperméabilisées, ainsi que le Brevet français 1 508 963 de R. B. Buonaiuto). Ces moules à empreinte poreuse sont d'une conception simple et ne nécessitent aucun additif absorbant le rayonnement UHF.

Toutefois, après plusieurs années de fonctionnement, on s'est aperçu du phénomène suivant : le gradient thermique dans la masse poreuse (par exemple la paroi en céramique) étant inversé par rapport à un chauffage classique, il en découle que la pression de la vapeur d'eau (ou d'une autre substance polaire) formée par la transformation de l'énergie électromagnétique en chaleur, est plus importante à l'intérieur que sur la surface de ladite paroi poreuse. Il en résulte qu'au début de chauffage, alors que la vaporisation est déjà commencée à l'intérieur, les couches superficielles sont encore en phase liquide. La pression à l'intérieur de la masse poreuse étant plus forte qu'à la surface, — et comme les structures poreuses de toutes les empreintes et parois utilisées jusqu'à maintenant sont monolithiques —, cette pression de la vapeur d'eau, provenant de l'intérieur de la masse poreuse, empêche la réabsorption équilibrée de l'eau se trouvant sur la surface ou condensée sur la surface de la paroi ou de l'empreinte, au contact de la mousse plastique. Autrement dit, la pression capillaire de toutes les empreintes et parois poreuses des moules utilisés jusqu'ici étant plus faible que la pression de la vapeur d'eau (ou d'une autre substance polaire) provenant de l'intérieur de la masse poreuse, le recyclage et la réabsorption de l'eau

2

(ou d'une autre substance polaire) condensée sur les surfaces des parois et au contact avec la mousse plastique, se trouvent, ainsi, grandement perturbés. Pour éviter cet inconvénient, on est actuellement obligé soit d'arrêter de temps en temps le chauffage pour permettre la réabsorption convenable de l'eau condensée, soit d'introduire un chauffage supplémentaire (comme c'est le cas du Brevet français 1 508 963) pour évaporer complètement l'eau condensée. Dans les deux cas, il y a à déplorer l'augmentation du coût de revient du moulage, qui peut atteindre des proportions non négligeables. C'est précisément pour remédier à cet état de choses que la présente invention s'est assignée comme but de pourvoir à un nouveau moule pour la fabrication des matières plastiques expansées qui répond mieux aux nécessités de la pratique que les moules à empreinte poreuse antérieurement connus (comme par exemple ceux décrits dans les Brevets français 2 441 474 et 1 508 963), notamment en ce qu'il permet une économie substantielle d'énergie et en ce qu'il permet un raccourcissement considérable du cycle de fabrication.

La présente invention a pour objet un moule pour la fabrication d'objets en matières plastiques non polaires, expansées, à l'aide du rayonnement UHF, caractérisé en ce qu'il contient une empreinte en matière poreuse qui n'est pas monolithique, mais, au contraire, constituée par des zones B à forces capillaires élevées et par des zones A à forces capillaires faibles et non nulles pour les liquides, le rapport des surfaces A/B étant compris entre 10/90 à 90/10, et de préférence égal à 50/50.

Le fait de créer sur la surface de l'empreinte d'une part des zones dont les forces capillaires sont grandes pour acheminer l'eau condensée sur la surface vers l'intérieur (pour remplacer celle qui s'évapore) et, d'autre part, des zones à faible capillarité pour les liquides, mais laissant s'échapper la vapeur formée à l'intérieur même de l'empreinte, permet une circulation harmonieuse eau-vapeur sans interrompre le processus de moulage et ne nécessitant pas l'apport de calories supplémentaires. A la connaissance de la Demanderesse, ce fait n'a jamais encore été réalisé jusqu'à maintenant.

Un autre avantage, très important, de l'invention consiste en ce qu'on peut régler et ajuster le débit de la vapeur selon les objets, en choisissant des empreintes dont le rapport zones A/zones B soit approprié.

C'est précisément lorsque le rapport A/B = 50/50 que l'on obtient (pour une puissance UHF constante) le meilleur taux d'humidité résiduelle dans la mousse plastique, et le plus fort taux d'émission de vapeur.

Selon un mode particulier de réalisation de l'invention, l'empreinte du moule est formée d'une pluralité de modules, ou mini-empreintes juxtaposées, de tailles et de formes voulues, chacun de ces petits modules conservant le même rapport des surfaces A/B que l'ensemble de l'empreinte.

Cette variante de réalisation est particulièrement avantageuse : les moules ainsi construits sont moins lourds et beaucoup plus résistants mécaniquement (les empreintes poreuses de grande surface sont très fragiles). De plus, il est très facile de former des empreintes de dimensions et formes voulues pour tous les objets moulés désirés, par simple juxtaposition desdits modules sur le corps du moule.

La présente invention a également pour objet un procédé de moulage d'objets en matières plastiques expansées à l'aide du moule selon l'une des revendications 1 ou 2, caractérisé en ce que l'on prépare un moule de forme et de dimensions appropriées, en choisissant un rapport convenable entre les surfaces des zones A et B de l'empreinte, selon la taille et l'épaisseur des objets à mouler, en ce que l'on répartit dans l'empreinte la quantité appropriée du liquide polaire, et en ce que dès l'absorption par l'empreinte poreuse dudit liquide polaire, on ferme le moule, on y introduit la matière plastique préexpansée et en ce que l'on soumet l'ensemble au rayonnement UHF.

Outre les dispositions qui précèdent, l'invention comprend encore d'autres dispositions, particularités et avantages, qui ressortiront de la description qui va suivre.

La présente invention vise plus particulièrement les moules pour la fabrication des matières plastiques expansées, conformes aux dispositions qui précèdent, ainsi que toutes installations, procédés d'ensemble et chaînes de fabrication d'objets moulés en matière plastique expansible, dans lesquels sont inclus les dispositifs conformes à la présente invention, et, également, les objets en mousse plastique obtenus à l'aide des moules et installations conformes à la présente invention.

L'invention pourra être mieux comprise à l'aide du complément de description qui va suivre, qui se réfère aux dessins et courbes annexés représentant un moule et une empreinte conformes à l'invention et leurs caractéristiques.

Il doit être bien entendu, toutefois, que ces dessins et courbes sont donnés uniquement à titre d'illustration de l'objet de l'invention et n'en constituent en aucune manière une limitation.

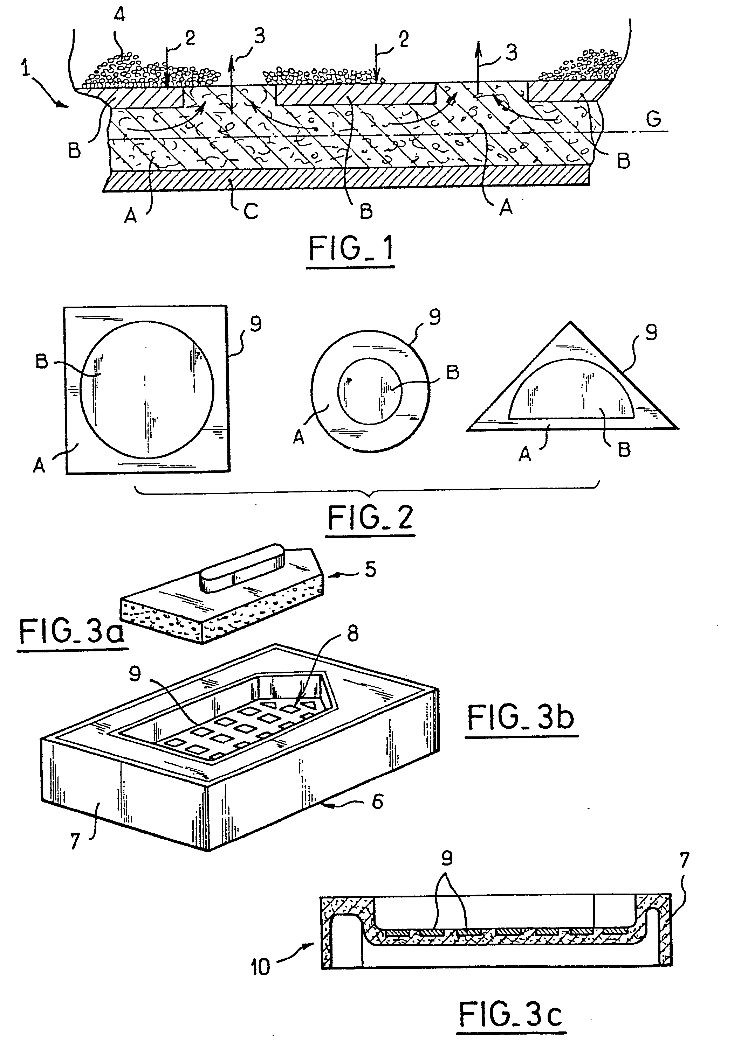

La figure 1 représente une coupe de l'empreinte 1 : on y distingue nettement les zones B (zone à forces capillaires élevées pour le liquide 2) et les zones A (lieux de passages préférentiels pour la vapeur 3), C étant la couche imperméabilisée de l'empreinte 1 qui jouxte le corps du moule. Comme pour tous les chauffages à l'aide de micro-ondes, le gradient thermique est inversé, la formation de la vapeur prend naissance sur la ligne médiane G. Du fait de la différence de structure entre les zones A et B, la vapeur 3 s'échappera plus facilement, par les conduits en matériau A. Inversement, le condensat qui se trouve sur la surface de l'empreinte 1 ou au contact des perles 4 de la matière plastique, s'absorbera plus facilement à travers les zones B. Cette structure composite de l'empreinte 1 permet la réabsorption équilibrée de l'eau (ou d'un autre liquide polaire) condensée et partant, le déroulement harmonieux de l'opération de moulage.

La figure 2 représente quelques formes que peuvent prendre les modules : ronde, carrée,

3

triangulaire. D'autres formes sont, bien entendu, possibles. Par la juxtaposition de ces modules, on peut créer une empreinte de forme et de surface voulues. Chacun de ces modules est une mini-empreinte dotée de deux zones A et B à forces capillaires différentes.

La figure 3 représente un exemple de réalisation d'un moule pour mouler des taloches à ciment 5. Le moule, dont seulement la partie femelle 6 est représentée, se compose du corps 7 formé de résine époxy contenant des fibres de silice pure, et de l'empreinte 8. Cette empreinte 8, dans cet exemple non limitatif, n'est pas réalisée d'une seule pièce, mais elle est constituée de 32 modules 9 en céramique ainsi répartis : 21 carrés, 6 triangles, 3 rectangles, 2 cercles : le tout représente une surface de 408 cm². Chacun de ces modules 9 comporte les deux zones A et B dans la proportion 50/50 en surface. Ces modules 9 — comme on le voit sur la coupe 10 de la partie femelle 6 du moule — sont juxtaposés côte à côte sur la surface du corps du moule 7 en résine époxy contenant les fibres de silice.

Afin de mieux démontrer l'extraordinaire avantage que représente le moule conforme à l'invention, la Demanderesse a réalisé l'expérience suivante : on a construit deux moules de forme strictement identique pour la fabrication des taloches à ciment en polystyrène expansé, d'un poids total de 30 g. L'un de ces moules a été construit comme représenté sur la figure 3 conformément à l'invention, le deuxième, par contre, contenait une empreinte faite d'une seule pièce et monolithique, c'est-à-dire sans la séparation en zones A et B.

Le tableau I ci-après compare les résultats obtenus

Tableau I

|  | Moule conforme à l'invention | Moule monolithique |
|---|---|---|
| -Poids total du moule | 2,5 kg | 6,5 kg |
| -Poids de la céramique nécessaire | 0,960 kg | 3,360 kg |
| -Temps de vaporisation | 35 secondes | 75 secondes |
| - Calories nécessaires | 82 Kcal. | 173 Kcal. |
| -Temps de refroidissement | 50 secondes | 90 secondes |
| -Temps total (cycle de fabrication) | 85 secondes | 165 secondes |

Il en résulte très clairement que pour avoir une même pièce (taloche à ciment par exemple), de même qualité, le cycle avec un moule ordinaire est pratiquement deux fois plus long, et la consommation en énergie est plus que double. De plus, le moule conforme à l'invention, dont l'empreinte est composée de modules juxtaposés, est beaucoup moins lourd, plus facile à construire, nécessitant moins de céramique, mais beaucoup moins fragile et beaucoup plus résistant mécaniquement que les moules ordinaires.

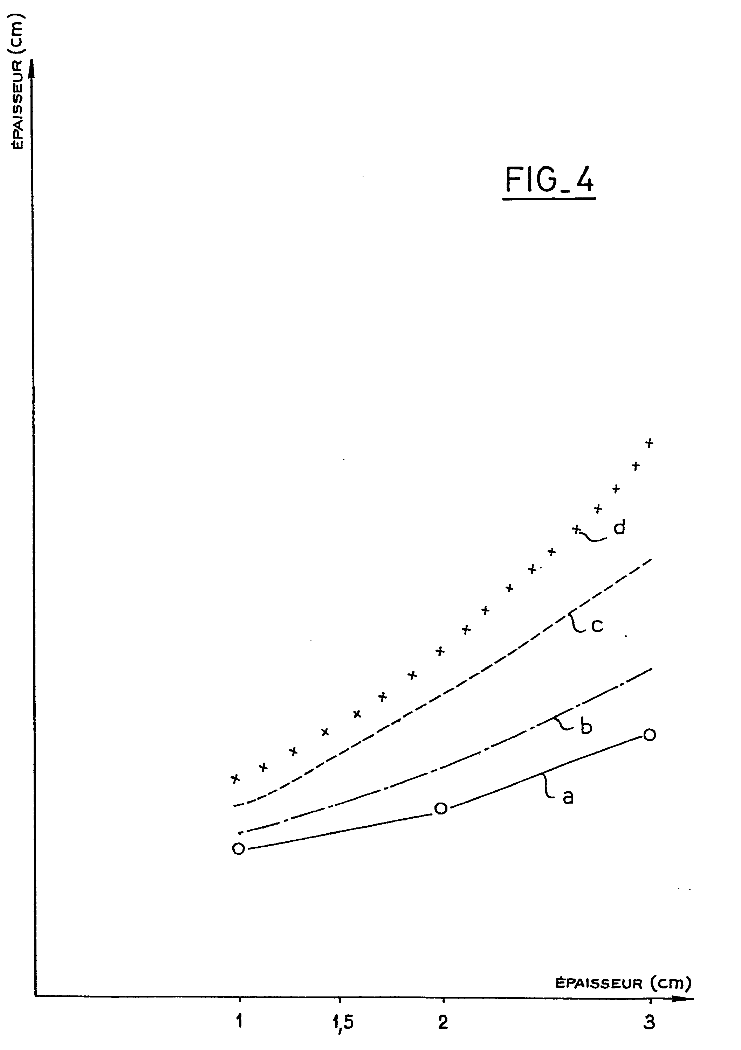

La figure 4 annexée représente un faisceau de courbes donnant la relation entre l'épaisseur de l'empreinte et l'épaisseur de l'objet moulé pour plusieurs qualités de céramique : (en abscisse l'épaisseur de l'empreinte poreuse en cm, en ordonnée — courbe logarithmique — l'épaisseur en cm de l'objet moulé)

céramique monolithique (courbe a)
céramique conforme à l'invention avec le rapport zone A/zone B = 10/90 (courbe b)
céramique conforme à l'invention avec le rapport zone A/zone B = 80/20 (courbe c)
céramique conforme à l'invention avec le rapport zone A/zone B = 50/50 (courbe d)

C'est — comme on le voit sur cette figure 4 — pour le rapport zone A/zone B = 50/50 que la relation épaisseur de l'empreinte/épaisseur de l'objet moulé est la plus favorable.

Ceci ressort également du tableau II ci-après qui donne la relation entre la qualité de l'empreinte et la quantité de vapeur émise (à puissance UHF constante).

Tableau II

| Céramique | quantité de vapeur émise (par g) par $cm^2$ d'empreinte |
|---|---|
| Monolithique | 0,05 |
| conforme à l'invention avec le rapport $\dfrac{A}{B} = \dfrac{10}{90}$ | 0,07 |
| conforme à l'invention avec le rapport $\dfrac{A}{B} = \dfrac{80}{20}$ | 0,09 |
| conforme à l'invention avec le rapport $\dfrac{A}{B} = \dfrac{25}{75}$ | 0,13 |
| conforme à l'invention avec le rapport $\dfrac{A}{B} = \dfrac{50}{50}$ | 0,17 |

L'empreinte conforme à l'invention émet trois fois plus de vapeur que l'empreinte courante, monolithique, lorsque le rapport zone A/zone B = 50/50 (toutes choses égales par ailleurs).

**Revendications**

1. Moule pour la fabrication d'objets en matières plastiques non polaires, expansées, à l'aide du rayonnement UHF, caractérisé en ce qu'il contient une empreinte (1) en matière poreuse qui n'est pas monolithique mais, au contraire, constituée par des zones B à forces capillaires élevées et par des zones A à forces capillaires faibles, et non nulles pour les liquides, le rapport de surface A/B étant compris entre 10/90 à 90/10 et de préférence égal 50/50.

2. Moule selon la revendication 1, caractérisé en ce que l'empreinte (1) du moule est formée d'une pluralité de modules (9), ou mini-empreintes, juxtaposées, de tailles et de formes voulues, chacun de ces petits modules conservant le même rapport des surfaces A/B que l'ensemble de l'empreinte.

3. Procédé de moulage de matières plastiques à l'aide du moule selon l'une quelconque des revendications 1 et 2, caractérisé en ce que l'on prépare un moule de forme et de dimension appropriées, en choisissant un rapport convenable entre les surfaces des zones A et B de l'empreinte, selon la taille et l'épaisseur des objets à mouler, en ce que l'on répartit dans l'empreinte la quantité appropriée du liquide polaire, et en ce que dès l'absorption par l'empreinte poreuse dudit liquide polaire, on ferme le moule, on y introduit la matière plastique pré-expansée et en ce que l'on soumet l'ensemble au rayonnement UHF.

**Claims**

1. A mould for the manufacture of objects from expanded, non-polar plastics using UHF radiation, characterized in that it contains a cavity (1) made of a porous substance, which is not monolithic but on the contrary consists of zones B with high capillary forces and of zones A with low capillary forces which are non-zero for liquids, the surface area ratio A/B being between 10/90 and 90/10 and preferably equal to 50/50.

2. The mould according to Claim 1, characterized in that the cavity (1) of the mould is formed of several modules (9), or mini-cavities, which are juxtaposed and of any desired size and shape, each of these small modules retaining the same surface area ratio A/B as the whole of the cavity.

3. A process for the moulding of plastics using the mould according to either one of Claims 1 and 2, characterized in that a mould of appropriate shape and size is prepared by choosing a suitable ratio between the surface areas of the zones A and B of the cavity, according to the size and thickness of the objects to be moulded, in that the appropriate quantity of the polar liquid is distributed into the cavity, in that, as soon as the said polar liquid has been absorbed by the porous cavity, the mould is closed and the pre-expanded plastic is introduced into it, and in that the whole is subjected to UHF radiation.

**Ansprüche**

1. Form zur Herstellung von Gegenständen aus nichtpolaren, expandierten Kunststoffen mit Hilfe von UHF-Strahlung, dadurch gekennzeichnet, daß sie eine Matrize (1) aus porösem Material enthält, welches nicht monolithisch ist, sondern im Gegensatz hierzu von Zonen B mit hohen Kapillarkräften und von Zonen A mit schwachen Kapillarkräften, die für Flüssigkeiten nicht null sind, gebildet ist, wobei das Oberflächenverhältnis A/B zwischen 10/90 bis 90/10 beträgt mund vorzugsweise gleich 50/50 ist.

2. Form nach Anspruch 1, dadurch gekennzeichnet, daß die Matrize (1) der Form von einer Mehrzahl von nebeneinander befindlichen Modulen (9) oder Minimatrizen gebildet ist, welche gewünschte Abmessungen und Formen haben, wobei jede dieser kleinen Formen das gleiche Oberflächenverhältnis A/B wie die Gesamtheit der Matrize erhält.

3. Verfahren zum Formen von Kunststoffen mittels einer Form gemäß einem der Ansprüche 1 und 2, dadurch gekennzeichnet, daß man eine Form von geeigneter Gestalt und Abmessung herstellt, daß man ein angemessenes Verhältnis zwischen den Oberflächen der Zonen A und B der Matrize gemäß der Form und Dicke der zu formenden Gegenstände auswählt, daß man in der Matrize die angemessene Menge an polarer Flüssigkeit verteilt und daß man gleich bei bzw. nach der Absorption dieser polaren Flüssigkeit durch die poröse Matrize die Form schließt, darin den vorexpandierten Kunststoff einbringt, und daß man das Ganze UHF-Strahlung aussetzt.

FIG_1

FIG_2

FIG_3a

FIG_3b

FIG_3c

FIG_4